# EUROPÄISCHE PATENTSCHRIFT

(11) **EP 1 596 082 B1**
(45) Veröffentlichungstag und Bekanntmachung des Hinweises auf die Patenterteilung: **29.08.2007**
(21) Anmeldenummer: 05010055.1
(22) Anmeldetag: 09.05.2005
(51) Int. Cl.: F16D 3/04, F16D 3/60

(54) **Kupplung zur drehfesten Verbindung zweier umlaufender Teile**
Coupling for the torque transmitting connection of two rotating parts
Accouplement pour la connexion en rotation de deux éléments

(30) Priorität: 14.05.2004 DE 102004024444
(43) Veröffentlichungstag der Anmeldung: 16.11.2005
(73) Patentinhaber: INKOMA MASCHINENBAU GMBH, 38162 CREMLINGEN (DE)
(72) Erfinder: Obermeier, Manfred, 38302 Wolfenbüttel (DE)
(74) Vertreter: Lins, Edgar

(56) Entgegenhaltungen:
- DE-A1- 3 522 487
- DE-C1- 4 403 555
- PATENT ABSTRACTS OF JAPAN Bd. 016, Nr. 569 (M-1343), 9. Dezember 1992 (1992-12-09) & JP 04 219526 A (NIPPON PISTON RING CO LTD), 10. August 1992 (1992-08-10)

## Beschreibung

Die Erfindung betrifft eine Kupplung zur drehfesten Verbindung zweier umlaufender Teile, mit einem Kupplungsmittelstück, das über in das Kupplungsmittelstück ragende zylindrische starre Zapfen der umlaufenden Teile mit den umlaufenden Teilen verbindbar ist, als einstückiges Teil ausgebildet ist und jeweils einen Zapfen aufnehmende, an federnden Armen angeordnete Aufnahmeöffnungen aufweist, wobei die federnde Arme so angeordnet sind, dass die beiden umlaufenden Teile in senkrecht zueinander stehenden Richtungen parallel relativ zum Kupplungsmittelstück verschiebbar sind.

Derartige Kupplungen sind in der Lage, die rotierenden Teile auch dann miteinander zu kuppeln, wenn die Drehachsen der beiden rotierenden Teile nicht genau miteinander fluchten.

Die hierfür durchgeführte relative Bewegung des Kupplungsmittelstücks zu den meist mit scheibenförmigen Flanschen verbundenen rotierenden Teilen derart, dass das Kupplungsmittelstück zu dem einen rotierenden Teil eine Verschiebebewegung ausführen kann, die senkrecht auf der entsprechenden Verschiebebewegung relativ zu dem anderen rotierenden Teil steht, ist durch die Oldham-Kupplung seit langem bekannt, bei der diese Verschiebebewegungen durch eine entsprechende Nut-Feder-Verbindung zwischen Kupplungsscheiben realisiert worden ist.

Es ist ferner seit langem bekannt, die Verschiebebewegung der mittleren Kupplungsscheibe dadurch zu steuern, dass diese mit den rotierenden Teilen, also meistens äußeren Kupplungsscheiben, über im Allgemeinen zwei drehbar angeordnete Lenker verbunden sind, wobei die jeweiligen Lenkerpaare für kleine Auslenkungen eine Parallelführung bewirken. Der Aufbau mit drei Kupplungsscheiben und jeweils zwei Zwischenräumen, in denen sich die Kupplungslenkerpaare befinden, erfordert jedoch eine gewisse Mindestlänge. Durch DE 44 03 555 C1 ist eine Ausführungsform bekannt geworden, bei der sich die Lenker auf derselben Seite der mittleren Kupplungsscheibe befinden, sodass die die Verbindung der der mittleren Kupplungsscheibe unmittelbar benachbarten äußeren Kupplungsscheibe mit den Lenkern bewirkenden Zapfen durch entsprechende Ausnehmungen der mittleren Kupplungsscheibe hindurchragen müssen.

Bei einer gattungemäßen Kupplung der eingangs erwähnten Art, wie sie aus DE 35 22 487 A1 bekannt ist, ist die mittlere Kupplungsscheibe entfallen und durch ein einstückiges Kupplungsmittelstück ersetzt, an dem die Kupplungslenker in Form von elastisch federnd angeordneten Armen des Kupplungsmittelstücks ausgebildet sind. Das Kupplungsmittelstück besteht dabei aus einem ringförmigen Grundkörper mit etwa radial gerichteten Ansatzstücken, von denen sich vier Arme in Form von zwei Armpaaren tangential zu dem ringförmigen Grundkörper erstrecken und an ihren Enden Hohlzylinder ausbilden, die zur Aufnahme jeweils eines Zapfens eines der umlaufenden Teile bestimmt sind. Die Verbindungslinien der Mittelachsen der Hohlzylinder der beiden Paare stehen senkrecht aufeinander. In jedem Armpaar ist ein Arm bezüglich der Drehrichtung vorlaufend und der andere Arm bezüglich der Drehrichtung nachlaufend ausgerichtet. Eine derartige Kupplung ist raumsparend, da die Kupplungs-Mittelscheibe entfällt, und preiswert herstellbar, da das Kupplungsmittelstück als ein preiswertes Kunststoff-Spritzgussteil ausgebildet sein kann. Die mit einer derartigen Kupplung übertragbaren Drehmomente sind jedoch aufgrund der begrenzten Stabilität des Kunststoffmittelstücks stark limitiert, sodass eine derartige Kupplung nicht für die Übertragung größerer Drehmomente eingesetzt werden konnte.

Der Erfindung liegt demgegenüber die Aufgabe zugrunde, eine Kupplung der eingangs erwähnten Art so auszubilden, dass sie für die Übertragung größerer Drehmomente geeignet ist.

Zur Lösung dieser Aufgabe ist erfindungsgemäß eine Kupplung der eingangs erwähnten Art dadurch gekennzeichnet, dass das Kupplungsmittelstück eine zur flächigen Auflage auf einem der umlaufenden Teile vorgesehene Scheibe aufweist, mit der die federnden Arme auf der dem anliegenden umlaufenden Teil abgewandten Seite über ein axial vorstehendes Ansatzstück einstückig verbunden sind und sich von dem Ansatzstück über eine Materialverjüngung und mit einem Abstand parallel zur Oberfläche der Scheibe erstrecken, und dass die Scheibe fluchtend mit den zur Aufnahme der Zapfen des flächig anliegenden umlaufenden Teils vorgesehenen Aufnahmeöffnung eine den Durchtritt des Zapfens und dessen relative Bewegung zur Scheibe erlaubende Ausnehmung aufweist.

Erfindungsgemäß sind die Arme des Kupplungsmittelstücks über die Ansatzstücke axial mit einer ggf. ringförmig geschlossenen Scheibe verbunden, die eine sehr hohe Stabilität in Drehrichtung gewährleistet und daher eine Übertragung großer Momente ermöglicht. Da die Scheibe im Wesentlichen nur eine Stabilisierungsfunktion in Drehrichtung ausübt, braucht sie keine große Dicke aufzuweisen, kann also mit einer deutlich geringeren Dicke als üblicherweise 10 bis 15 mm starke Kupplungsscheiben aufweisen. Die erfindungsgemäß vorgesehene Scheibe des Kupplungsmittelstücks hat vorzugsweise eine Dicke zwischen 0,5 und 5 mm, insbesondere 1 bis 3 mm. Eine Dicke von 2 mm stellt ein gewisses Optimum dar, wenn die Dicke des Kupplungsmittelstücks insgesamt in der Größenordnung der in der Praxis häufig verwendeten Dicke der Kupplungsscheiben (12 mm) liegen soll und beispielsweise 14 mm beträgt. Zur Übertragung großer Drehmomente kann das Material des Kupplungsmittelstücks, z. B. faserverstärkter Kunststoff, in geeigneter Weise ausgewählt oder eine modifizierte Formgebung verwendet werden.

Ein Vorteil der erfindungsgemäßen Kupplung besteht darin, dass die Arme nicht über relativ dünne radial gerichtete Ansatzstücke mit einem zentralen Ring verbunden sind, sondern auf einer Umfangslinie mit einem großen Radius über massive Ansatzstücke axial mit der Scheibe verbunden sind. Wenn die Scheibe flächig an einem umlaufenden Teil, vorzugsweise einem scheibenförmigen Flansch zumindest gleicher Größe anliegt, trägt der Flansch ebenfalls zur Stabilisierung des Kupplungsmittelstücks bei, da er die Scheibe flächig abstützt.

Die das Hindurchragen des Zapfens des anliegenden umlaufenden Teils ermöglichende Ausnehmung muss so ausgebildet sein, dass sie die aufgrund der Bewegung der Arme entstehende relative Bewegung der Scheibe gegenüber dem anliegenden umlaufenden Teil ermöglicht. In einer die Fertigbarkeit des Kupplungsmittelstücks vereinfachenden Ausführungsform erstreckt sich die Ausnehmung über die gesamte Länge des sich an das Ansatzstück anschließenden Arms und weist eine größere Breite als der Arm auf. Entsprechende Ausnehmungen sind vorzugsweise auch an den Armen des anderen Armpaares vorgesehen. Auf diese Weise lässt sich das Kupplungszwischenstück mit einer Gießform herstellen, die ohne die Verwendung von parallel zur Trennebene von Formhälften angeordnete Schieber auskommt.

Für den Fall, dass die Übertragung maximaler Drehmomente im Vordergrund steht, kann es zweckmäßig sein, die Ausnehmung in Form eines Langlochschlitzes auszubilden, dessen Längsrichtung in der Verschieberichtung des betreffenden Arms liegt und dessen Breite dem Durchmesser des durch ihn hindurchragenden Zapfens entspricht. Auf diese Weise kann eine unmittelbare Übertragung des Drehmoments auf die dem umlaufenden Teil benachbarte Scheibe erfolgen.

Die Ausbildung der in der benötigten Weise elastisch auslenkbaren Arme, die dennoch die Übertragung eines großen Drehmoments ermöglichen, gelingt bevorzugt dadurch, dass die Arme von der Materialverjüngung bis zum die Durchgangsöffnung aufweisenden freien Ende eine vorzugsweise stetig zunehmende Breite aufweisen.

Die erfindungsgemäße Kupplung hat für Drehmomentspitzen Dämpfungseigenschaften und überträgt die Drehmomente dabei winkeltreu, vermeidet somit Phasenver schiebungen zwischen An- und Abtrieb.

Die vorliegende Erfindung soll im Folgenden anhand eines in der Zeichnung dargestellten Ausführungsbeispiels näher erläutert werden. Es zeigen:
- Figur 1: eine Seitenansicht mit Teilschnittdarstellungen einer Ausführungsform der erfindungsgemäßen Kupplung zwischen zwei Klemmflanschscheiben als drehende Teile;
- Figur 2: einen Schnitt entlang der Linie A-A in Figur 1 mit einer Ansicht einer Seite eines Kupplungsmittelstücks;
- Figur 3: einen Schnitt entlang der Linie B-B in Figur 1 mit Ansicht der anderen Seite des Kupplungsmittelstücks.

In dem dargestellten Ausführungsbeispiel ist ein erstes drehendes Teil 1 durch einen runden Klemmflansch 1 und ein zweites rotierendes Teil durch einen runden Klemmflansch 2 gebildet. Zwischen den ringförmigen Klemmflanschen 1, 2 befindet sich ein Kupplungsmittelstück 3, mit dem eine drehfeste Verbindung der beiden drehenden Teile 1,2 hergestellt wird.

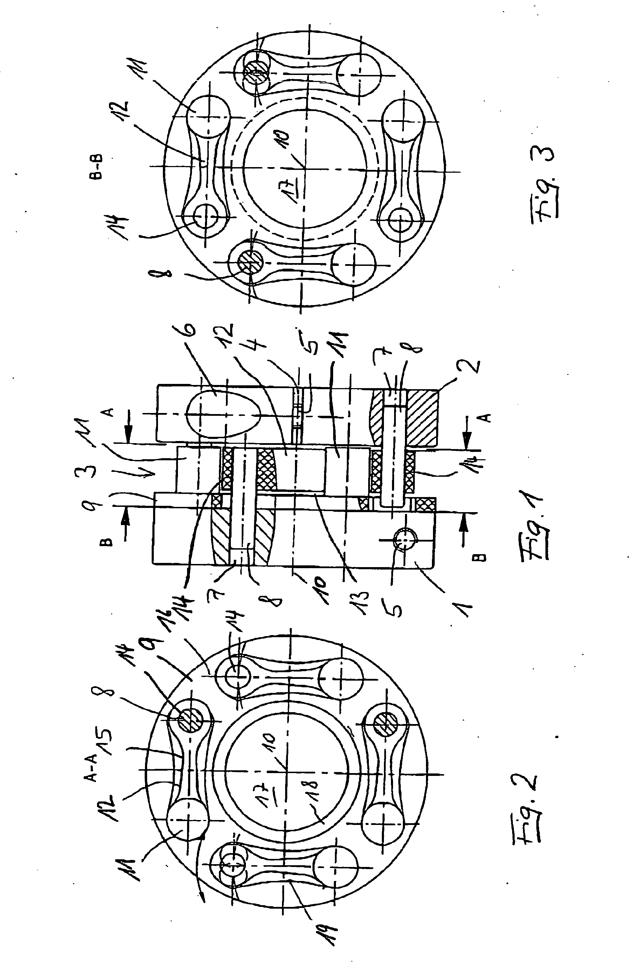

Die umlaufenden Teile 1, 2 sind als Klemmflansche ringförmig ausgebildet, um jeweils ein Wellenende zu umgreifen. Beide Flansche weisen einen durchgehenden radialen Schlitz 4 auf, der mit einer Schraube 5 zum Klemmen des Ringflansches auf dem zugehörigen Wellenende zusammenziehbar ist. In Figur 1 ist am ersten Ringflansch 1 ein freies Ende der entsprechenden Schraube 5 erkennbar, auf dem zweiten Ringflansch 2 hingegen eine in die Umfangsfläche eingebrachte Bohrung 6 für einen Kopf der Schraube 6.

In die beiden umlaufenden Teile 1,2 sind jeweils zwei Bohrungen 7 eingebracht, in die zylindrische Zapfen 8 eingepresst sind. Die zylindrischen Zapfen 8 stehen aus der dem Kupplungsmittelstück zugewandten Fläche des zugehörigen umlaufenden Teils 1, 2 hervor und ragen somit in das Kupplungsmittelstück 3 hinein.

Das Kupplungsmittelstück 3 weist eine an dem ersten umlaufenden Teil 1 anliegende ringförmige Scheibe 9 auf, deren Mittenachse 10 die Drehachse der Kupplung bildet, wenn die umlaufenden Teile 1, 2 bezüglich ihrer Drehachse miteinander fluchten. In axialer Richtung ragen aus der nicht an dem ersten umlaufenden Teil 1 anliegenden Seite der Scheibe 9 massive zylindrische Ansatzstücke 11 heraus, von denen ausgehend sich Arme 12 parallel zur Oberfläche der Scheibe 9 und mit einem geringen Abstand 13 zu der Oberfläche erstrecken. Die Arme weisen an ihrem freien Ende eine Aufnahmeöffnung 14 auf, in die das Ende des zugehörigen Zapfens 8 zur Bildung eines Drehlagers hineinragt.

Die Figuren 2 und 3 verdeutlichen, dass in dem dargestellten Ausführungsbeispiel auf der Scheibe 9 vier Arme 12 angeordnet sind, die sich von dem Ansatzstück 11 aus über eine Materialverjüngung 15 zum freien Ende hin wieder verdicken, um dort die Aufnahmeöffnung 14 zu bilden. Die Arme erstrecken sich jeweils um 90° zueinander auf der Ringfläche der Scheibe 9 versetzt jeweils tangential mit ihren Längsachsen 16 zur Drehachse 10 der Scheibe 9.

Dabei ist erkennbar, dass die zu einem Paar gehörenden Arme 12 parallel zueinander gerichtet sind, sodass für eine Drehrichtung der eine Arm 12 des Paares dem zugehörigen Zapfen 8 nachläuft und der andere Arm 12 dem zugehörigen Zapfen 8 vorläuft.

Die ringförmige Scheibe 9 weist einen kreisförmigen Innenraum 17 auf und ist am Rand zu diesem Innenraum mit einem zylindrischen, rohrartigen Ansatz 18 verstärkt, um die Formstabilität der Scheibe 9 noch zu erhöhen.

Im Bereich der Arme 12 ist die Scheibe mit Ausnehmungen 19 versehen, die etwas breiter als der zugehörige Arm 12 sind und sich über die gesamte Länge des Arms 12, ausgehend von dem Ansatzstück 11, erstrecken, wodurch der Arm 12 vollständig oberhalb der Ausnehmung 19 verläuft, sodass ein Formteil für die Unterseite des Arms 12 durch die Ausnehmung ragen kann.

Wie in den Figuren 2 und 3 beispielhaft an jeweils einem Arm 12 verdeutlicht ist, kann sich der in der Aufnahmeöffnung 14 des Arms 12 befindliche Zapfen etwas seitlich zu beiden Seiten der Längsachse 16 des Arms 12 bewegen, weil der Arm 12 ausgehend von dem Ansatzstück 11 aufgrund seiner elastischen Eigenschaften etwa auf einem Kreisbogen verschwenkbar ist. Für geringe Auslenkungen bilden die parallel zueinander liegenden Arme 12 eines Armpaares eine Parallelführung.

Die Zeichnungen lassen erkennen, dass die Dicke der ringförmigen Scheibe 9 des Kupplungsmittelstücks 3 gering sein kann, und zwar deutlich kleiner als die axiale Höhe der Ansatzstücke 11 und der Arme 12. In einer bevorzugten Ausführungsform beträgt die Dicke der Scheibe 9 zwischen 1/6 und 1/2, vorzugsweise zwischen 1/6 und 1/4, der Ansatzstücke 11.

Trotz der geringen Dicke der Scheibe 9 bewirkt diese einen sehr stabilen Aufbau des Kupplungsmittelstücks 3, der die Übertragung hoher Drehmomente erlaubt.

## Patentansprüche

1. Kupplung zur drehfesten Verbindung zweier umlaufender Teile (1, 2), mit einem Kupplungsmittelstück (3), das über in das Kupplungsmittelstück (3) ragende zylindrische starre Zapfen (8) der umlaufenden Teile (1, 2) mit den umlaufenden Teilen (1, 2) verbindbar ist, als einstückiges Teil ausgebildet ist und jeweils einen Zapfen (8) aufnehmende, an federnden Armen (12) angeordnete Aufnahmeöffnungen (14) aufweist, wobei die federnden Arme (12) so angeordnet sind, dass die beiden umlaufenden Teile (1, 2) in senkrecht zueinander stehenden Richtungen parallel relativ zum Kupplungsmittelstück (3) verschiebbar sind, **dadurch gekennzeichnet, dass** das Kupplungsmittelstück (3) eine zur flächigen Auflage auf einem der umlaufenden Teile (1) vorgesehene Scheibe (9) aufweist, mit der die federnden Arme (12) auf der dem anliegenden umlaufenden Teil (1) abgewandten Seite über ein axial vorstehendes Ansatzstück (11) einstückig verbunden sind und sich von dem Ansatzstück (11) mit einer Materialverjüngung (15) und mit einem Abstand (13) parallel zur O-berfläche der Scheibe (9) erstrecken, und dass die Scheibe (9) fluchtend mit den zur Aufnahme der Zapfen (8) des flächig anliegenden umlaufenden Teils (1) vorgesehenen Aufnahmeöffnungen (14) eine den Durchtritt des Zapfens (8) und dessen relative Bewegung zur Scheibe (9) erlaubende Ausnehmung (19) aufweist.

2. Kupplung nach Anspruch 1, **dadurch gekennzeichnet, dass** sich die Ausnehmung (19) über die gesamte Länge des sich an das Ansatzstück (11) anschließenden Arms (12) erstreckt und eine größere Breite als der Arm (12) aufweist.

3. Kupplung nach Anspruch 1, **dadurch gekennzeichnet, dass** die Ausnehmung in Form eines Langlochschlitzes ausgebildet ist, dessen Längsrichtung in der Verschieberichtung des betreffenden Arms (12) liegt und dessen Breite dem Durchmesser des durch ihn hindurchragenden Zapfens (8) entspricht.

4. Kupplung nach einem der Ansprüche 1 bis 3, **dadurch gekennzeichnet, dass** die Arme (12) von der Materialverjüngung (15) bis zum die Durchgangsöffnung (14) aufweisenden freien Ende eine zunehmende Breite aufweisen.

5. Kupplung nach Anspruch 4, **dadurch gekennzeichnet, dass** die Arme (12) eine zu ihrem freien Ende hin stetig zunehmende Breite aufweisen.

6. Kupplung nach einem der Ansprüche 1 bis 5, **dadurch gekennzeichnet, dass** die Scheibe (9) eine Dicke zwischen 0,5 und 5 mm aufweist.

7. Kupplung nach Anspruch 6, **dadurch gekennzeichnet, dass** die Scheibe (9) eine Dicke zwischen 1 und 3 mm aufweist.

8. Kupplung nach Anspruch 7, **dadurch gekennzeichnet, dass** die Scheibe (9) eine Dicke von etwa 2 mm aufweist.

## Claims

1. Coupling for the rotationally fixed connection of two rotating parts (1, 2), with a coupling middle piece (3) which is connectable to the rotating parts (1, 2) via cylindrical rigid tenons (8), projecting into the coupling middle piece (3), of the rotating parts (1, 2), is produced as a one-piece part and has in each case reception orifices (14) receiving a tenon (8) and arranged on resilient arms (12), the resilient arms (12) being arranged such that the two rotating parts (1, 2) are displaceable in parallel in relation to the coupling middle piece (3) in directions perpendicular to one another, **characterized in that** the coupling middle piece (3) has a disc (9) which is provided for bearing over a large area on one of the rotating parts (1) and by means of which the resilient arms (12) are connected in one piece via an axially projecting extension piece (11) on the side facing away from the rotating part (1) coming to bear and extend, at a distance (13), parallel to the surface of the disc (9), from the extension piece (13) with a material taper and **in that** the disc (9) has, in alignment with the reception orifices (14) provided for receiving the tenons (8) of the rotating part (1) coming to bear over a large area, a recess (19) allowing the passage of the tenon (8) and its relative movement with respect to the disc (9).

2. Coupling according to Claim 1, **characterized in that** the recess (19) extends over the entire length of the arm (12) adjoining the extension piece (11) and has a greater width than the arm (12).

3. Coupling according to Claim 1, **characterized in that** the recess is designed in the form of a long-hole slot, the longitudinal direction of which lies in the displacement direction of the respective arm (12) and the width of which corresponds to the diameter of the tenon (8) projecting through it.

4. Coupling according to one of Claims 1 to 3, **characterized in that** the arms (12) have an increasing width from the material taper (15) as far as the free end having the passage orifice (14).

5. Coupling according to Claim 4, **characterized in that** the arms (12) have a width increasing continuously towards their free end.

6. Coupling according to one of Claims 1 to 5, **characterized in that** the disc (9) has a thickness of between 0.5 and 5 mm.

7. Coupling according to Claim 6, **characterized in that** the disc (9) has a thickness of between 1 and 3 mm.

8. Coupling according to Claim 7, **characterized in that** the disc (9) has a thickness of about 2 mm.

## Revendications

1. Accouplement pour relier, de façon fixe en rotation, deux parties tournantes (1, 2), comprenant une pièce centrale d'accouplement (3) qui peut être reliée avec les parties tournantes (1, 2) au moyen de tenons cylindriques rigides (8) des parties tournantes (1, 2) s'engageant dans la pièce centrale d'accouplement (3) qui est réalisée d'une seule pièce et présente des ouvertures de réception (14) disposées sur des bras élastiques (12) pour la réception de chacun des tenons (8), dans lequel les bras élastiques (12) sont agencés de telle sorte que les deux parties tournantes (1, 2) sont déplaçables dans les directions perpendiculaires l'une par rapport à l'autre, parallèlement par rapport à la pièce centrale d'accouplement (3), **caractérisé en ce que** la pièce centrale d'accouplement (3) présente un disque (9) prévu pour s'appliquer sur la surface de l'une des parties tournantes (1), disque avec lequel les bras élastiques (12) sont reliés d'une seule pièce par une pièce d'embout (11) faisant saillie axialement sur la face adjacente de la partie tournante (1), et qui s'étendent à partir de la pièce d'embout (11) avec un rétrécissement de matériau (15) et avec un espacement (13) parallèlement à la surface du disque (9), **en ce que** le disque (9) présente un évidement (19) qui affleure avec les ouvertures de réception (14) prévues pour la réception des tenons (8) de la partie tournante (1) s'appliquant sur sa surface, qui permet le passage des tenons (8) et leur mouvement relatif par rapport au disque (9).

2. Accouplement selon la revendication 1, **caractérisé en ce que** l'évidement (19) s'étend sur la totalité du bras (12) qui est raccordé à la pièce d'embout (11) et présente une largeur supérieure à celle du bras (12).

3. Accouplement selon la revendication 1, **caractérisé en ce que** l'évidement est réalisé sous forme de trou allongé dont la direction de la longueur est située dans la direction de déplacement du bras (12) concerné, et dont la largeur correspond au diamètre du tenon (8) qui fait saillie au travers de celui-ci.

4. Accouplement selon l'une des revendications 1 à 3, **caractérisé en ce que** les bras (12) présentent, à partir du rétrécissement de matériau (15) jusqu'à l'extrémité libre présentant l'ouverture du passage (14), une largeur croissante.

5. Accouplement selon la revendication 4, **caractérisé en ce que** les bras (12) présentent une largeur qui croît de façon continue jusqu'à leur extrémité libre.

6. Accouplement selon l'une des revendications 1 à 5, **caractérisé en ce que** le disque (9) présente une épaisseur comprise entre 0,5 et 5 mm.

7. Accouplement selon la revendication 6, **caractérisé en ce que** le disque (9) présente une épaisseur comprise entre 1 et 3 mm.

8. Accouplement selon la revendication 7, **caractérisé en ce que** le disque (9) présente une épaisseur d'environ 2 mm.
